Europäisches Patentamt

(19) European Patent Office    (11) Publication number: **0 022 165**

Office européen des brevets    **B1**

(12)    **EUROPEAN PATENT SPECIFICATION**

(45) Date of publication of patent specification: **08.05.85**    (51) Int. Cl.⁴: **C 08 J 5/06, C 08 J 5/08, B 29 C 41/04, C 08 K 9/04**

(21) Application number: **80102871.3**

(22) Date of filing: **23.05.80**

(54) Method for producing a layer of a fibre-reinforced rotationally-molded thermoplastic resin, a layer obtained thereby and reinforcing fibres therefor.

(30) Priority: **06.06.79 IL 57492**

(43) Date of publication of application:
**14.01.81 Bulletin 81/02**

(45) Publication of the grant of the patent:
**08.05.85 Bulletin 85/19**

(84) Designated Contracting States:
**AT BE CH DE FR GB IT LI LU NL SE**

(56) References cited:
**DE-A-1 769 880**
**DE-A-2 136 124**
**DE-A-2 555 413**

(73) Proprietor: **ROTOPLAS LTD.**
**Talpiot Industrial Area P.O. Box 10285**
**Jerusalem (IL)**

(72) Inventor: **Rosen, Haim**
**Rechov Tevuot Haaretz 30**
**Tel Aviv (IL)**

(74) Representative: **Hoormann, Walter, Dr. et al**
**FORRESTER & BOEHMERT Widenmayerstrasse 4/I**
**D-8000 München 22 (DE)**

Courier Press, Leamington Spa, England.

## Description

The present invention relates to reinforcing fibres for use in rotational molding and to a method for producing a fibre-reinforced plastic material using said fibres.

More particularly the present invention relates to reinforcing fibres and their use to produce a substantially uniform layer of a fibre reinforced plastic material having a substantially uniform distribution of fibres throughout the whole thickness of said layer.

Processes for the manufacture of hollow plastic articles by rotational molding are well known as are known processes for reinforcing plastic materials by distributing reinforcing fibres in the plastic matrix thereof. Among the advantages that can be achieved by reinforcing plastic materials with fibres are an increase in dimensional stability, in temperature resistance and in pressure resistance and a reduction in creep rate. Thus, it is known that articles having good mechanical strength and high wall stiffness as well as reduced shrinkage and thereby uniform reproducability of dimensions of produced structures could be achieved by the introduction of reinforcing fibres into the plastic matrix of a produced article. It has also been found, however, that the degree of improvement to a large extent depends on the concentration and distribution of the fibres in the product.

A major problem and obstacle to the production by rotational molding of a high quality fibre reinforced plastic material was the inability of the prior art to propose a method of assuring a uniform distribution between the fibres and the layer-forming plastic material which would in turn enable the production of relatively thick layers of fibre-reinforced plastic material, having even relatively high amounts of fibres distributed substantially uniformly throughout the whole thickness of said layer.

The reason for this problem is that when, for example, polyethylene and chopped glass fibres are mixed together and rotomolded, a concentration gradient of fibres is observed in the wall cross section of the product. The glass fibres concentration increases toward the inner surface of the product and at the surface the fibre concentration is so high that in most cases free glass fibres can be poured out from the rotomolded product. Of course, in such moldings the above-mentioned improvements will not be achieved.

The separation between the glass fibres and the polyethylene powder results from the character of the rotomolding process, which is a two stage process, involving sintering and then densification, in which the resin passes from the powder form into fused form of the product.

The sintering commences when the inner surface of the mold reaches the melt temperature of the polymer. Grains that contact the hot mold stick to it. Additional heat which is transferred from the mold to the sintered powder, causes the complete fusion of these grains. The flow properties of the molten grains enable the formation of a continuous, bubble free dense layer. This second stage of the process is called "densification". On the first densified layer a new sintered layer is formed. And so layer after layer the wall of the product is constructed.

When a mixture of two materials with different melting points is introduced into the mold, the polymer with the lower melting point will fuse first causing a polymer separation during the rotomolding process. When the two constituents of the mixture are resin powder and chopped fibres, the tendency for separation is much stronger.

In recognition of this problem both Brit. Pat. 1,381,863 and French Patent 2,163,380 suggest the rotational molding of layered products wherein a first outer layer is formed from fibre-free thermoplastic material, a second layer is formed having reinforcing fibres and so on so that the problem of attempting to achieve an even distribution of fibres throughout a relatively thick layer of plastic is avoided.

Similarly in U.S. Patent 3,714,312 there is described a method of producing pipes made of fibre-reinforced thermoplastic material which Patent, while not relating to rotational molding as herein described, being limited to rotation through only one mode of rotation instead of at least two, nevertheless, specifically teaches that only by limiting each layer to a thickness of less than approximately 2 mm can separation of fibres and resin powder during molding be reduced.

In South African Patent Application No. 7515091 there is described and claimed a fibre-reinforced plastics material comprising a plastics matrix and substantially randomly oriented inorganic fibres uniformly dispersed throughout the matrix and a method for the production thereof. Said patent, however, is completely silent with regard to the above-mentioned problem of separation and concentration gradient of fibres and does not provide any solutions for said observed problem. It is noted, however, that the only example in said patent involved the introduction of only 2.5 per cent by weight of glass fibres and that the patent claims a fibre content in the order of 2 to 5 per cent by weight noting that no improvement was observed when weight per cent was increased from 2.5 to 5%. In contradistinction to said prior art patents and the methods described and claimed therein, the present invention provides a method of producing even a relatively thick layer of fibre reinforced plastic material having a substantially uniform distribution of fibres throughout the whole thickness of said layer and also provides specially prepared reinforcing fibres for use in said method.

Thus, in one aspect of the present invention there is provided a method for producing a substantially uniform layer of a fibre-reinforced thermoplastic resin comprising pretreating said fibres by at least partially coating them with thermoplastic resin compatible with having a melting point substantially not higher than said layer-forming thermoplastic resin and sinterable therewith, to produce discrete reinforcing fibres having the required integrity, length and strength for rotational molding, and then subjecting a substantially homogeneous blend of said pretreated fibres and said layer-forming thermoplastic resin to a rotational molding process whereby there is produced a layer of fibre reinforced thermoplastic resin having a substantially uniform distribution of fibres throughout the whole thickness of said layer.

In another aspect of the present invention there are provided discrete reinforcing fibres for use in rotational molding to produce a substantially uniform layer of a fibre reinforced thermoplastic resin having a substantially uniform distribution of fibres throughout the whole thickness of said layer, wherein said fibres are pretreated with at least a partial coating of a thermoplastic resin compatible with, having a melting point substantially not higher than that of said layer-forming thermoplastic resin and sinterable therewith, to produce discrete reinforcing fibres having the required integrity, length and strength for rotational molding.

The layer-forming thermoplastic resin may be any material susceptible to and used or utilizable in a rotational molding process and especially a layer-forming thermoplastic resin material selected from the group consisting of polyolefins such as polyethylene, polypropylene and other polyolefinic homo- and co-polymers, ethylene vinyl acetate copolymers, thermoplastic polyesters, polycarbonates, polyamides, e.g., nylon 12 and nylon 11, acetal copolymers and combinations thereof are envisioned for use. Such layer forming plastic material may of course also be cross-linkable, e.g., cross-linkable polyethylene.

Similarly the reinforcing fibres may be any of those susceptible to and used or utilizable as reinforcing fibres in a rotational molding process, especially fibres selected from the group consisting of glass fibres, carbon fibres, organic fibres, asbestos fibres and metal fibres. Preferred are glass fibres and carbon fibres and especially preferred are glass fibres.

As will be described hereinafter, the coating resin can be selected from a wide range of resins chosen for their compatability and sinterability with the layer-forming plastic material and in many cases the coating resin can be from the same material as the layer-forming plastic.

Thus, for example, in several preferred embodiments of the present invention there are provided glass fibres especially adapted for use in rotational molding to produce a substantially uniform glass fibre reinforced polyethylene layer comprising glass fibres pretreated with at least a partial coating of a resin compatible and sinterable with polyethylene, e.g., wherein said fibres are at least partially coated with ethylene vinyl acetate copolymer or are at least partially coated with polyethylene.

It is to be noted that the incorporation of reinforcing fibres into olefin polymers by pretreating and/or preblending has already also been considered by the art. Thus as described in U.S. Patent 3 857 813 in the production of fiber reinforced polyolefin articles, such as glass fibre reinforced articles, it has been the practice in the art to combine the reinforcing fibers with heat plastified polymer in order to intimately mix and coat or encase the fibers in the plastic polymer. The product containing the encapsulated glass fibers or chopped strands substantially uniformly distributed throughout is cooled and ground or cut to granular form suitable for molding. Such a processing is described in Brit. Pat. 1 010 043, however as described therein the resulting product is granular in form and the fibres do not retain the requisite integrity, length and strength recognized by men in the art as necessary for effecting reinforcement of rotationally molded products. U.S. Patent 3 857 813 which points out the deficiencies of said prior art processing and proposes an alternative dry blending method using very specific components, also obviously does not teach or suggest the pretreatment method of the present invention to effect at least a partial coating of the fibres with a thermoplastic resin compatible and sinterable with the layer forming plastic material.

The advantages of the present invention can be achieved by several variations within the framework of the general method and approach defined hereinbefore.

One approach is to pretreat the fibres to create adhesive sites thereon and then to premix said fibres with said resin coating material to effect the adhesion of resin coating particles thereto. Said pretreatment could be by preheating of said fibres to a sufficient temperature so that upon premixing with said coating resin, in powder form, there is effected the sintering and adhesion of said powder on and to said hot fibres. Said fibres could alternatively be pretreated by spraying with a volatile solution of a thermosetting adhesive and then premixing with coating resin whereby upon the hardening of said adhesive said coating resin adheres thereto and forms at least a partial coating thereon.

Another approach is to pretreat said fibres with a hot solution containing said coating resin, which resin, as stated, could be the same or different than the layer-forming plastic material, to form at least a partial coating of said coating resin on said fibres.

Thus, e.g., the coating of glass fibres for use in rotational molding with polyethylene could be carried out in the following different ways:

1. Heating the fibres to a high temperature, e.g. in the range of about 160° to about 320° and preferably about 190° to about 250°C and while hot, mixing them with excess of polyethylene powder. The fine grains of the powder undergo a sintering process on the hot fibres. The partial coating helps the fibre to stick to the hot mold, or to the molten polyethylene layer, thus causing an even distribution of the fibres through the whole thickness of the product;

2. Temporarily wetting said fibres with an agent, such as, non-volatile liquid peroxide, to allow a partial temporary coating of powder on the fibres which coating lasts long enough to allow successful rotational molding therewith before said peroxide decomposes in said molding process;

3. Applying an intermediate gluing agent. In this kind of treatment the fibres are sprayed with a very-dilute and volatile solution of a thermosetting adhesive like epoxy.

The wet fibres are immediately blended with excess of polyethylene powder, the volatile solvent evaporates and the resins stick to the epoxy layer and cover the fibre permanently after the epoxy is hardened;

4. Coating the fibres with a dilute solution of EVA (Ethylene Vinyl Acetate) copolymer. Being compatible with polyethylene the EVA coated fibres behave exactly as polyethylene coated fibres and an even distribution of the fibres is achieved; and

5. Pretreating continuous fibres with a hot solution containing dissolved polyethylene wherein said polyethylene is preferably dissolved in a solvent selected from the group consisting of toluene, xylene and ethyl benzene and then chopping said coated fibres to the desired lengths.

All of the above-mentioned coating processes which can be carried out initially on chopped reinforcing fibres can also be carried out on continuous fibres which are then chopped to the desired length to form reinforcing fibres having the necessary integrity, length and strength for reinforcement in rotational molding.

Preferably said fibres are subjected to said rotational molding process in lengths ranging from about 3 to about 12 mm, and a mixture of a major proportion of shorter fibres and a minor proportion of longer fibres within said range is especially preferred.

Of the above variations of pretreatment the heating of the fibres as described in 1 hereinbefore and in the examples hereinafter is especially preferred because of the economy and simplicity of said process.

While the invention will now be described in connection with certain preferred embodiments in the following examples so that it may be more fully understood, it will be realised that it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only and are presented in the cause of providing what is believed to be most useful and readily understood description of procedures as well as of the principles and conceptual aspects of the invention.

Example 1

600 g of 3 mm long, chopped glass fibers were heated to 220°C. 2400 g of 35 mesh polyethylene powder (density 0.937 g/cm$^3$, mfi=5) were introduced into a low speed mixer (max. 20 r/p/m) and mixed. The hot fibres were introduced into the mixing powder without forming any clusters. After all the fibres were introduced, the mixing was continued for another 4 minutes.

The mixture was then introduced into a cubic mold of 30×30×30 cm dimensions. The mold was rotated in two perpendicular axes. The revolution ratio of the two axes was

$$\frac{\text{Major}}{\text{Minor}} = \frac{3.75}{1}.$$

The revolution rate of the major axis was 10 r.p.m. The mold was introduced into an air convected oven at 320°C, while rotating for 35 min. The mold was then transferred into the cooling station where it was first air cooled, followed by water spray cooling. When the mold temperature reached 40°C, it was opened and the product removed. The cube obtained had perfect straight surfaces and its shrinkage was nearly zero, which caused some difficulties in removing the product from the mold. The glass fibre distribution was perfect. A fibre concentration analysis was carried out on the external and internal surfaces. The glass fibre concentration of the external surface was 19.5%, and of the internal surface 20.5% and the average wall thickness of the cube obtained was about 5.5 mm.

Example 2

5 g of 2.5 dimethyl 2.5 di-(tert-butoxy-peroxy)-3-hexyne were dissolved in 50 cm$^3$ of methylene chloride. 600 g of chopped glass fibres, while mixed in a low speed mixer were sprayed with the above solution. The volatile solvent evaporated immediately, and the fibres which remain slightly wet by the peroxide and traces of solvent, were mixed with 2400 g of 35 mesh crosslinkable PE powder, for 4 min. The mixture of glass fibres and PE was introduced into the cubic mold. The mold, while biaxially rotating, was introduced into an air convected oven at 280°C for 45 min. The product obtained had a very low shrinkage, and the glass fibres were perfectly distributed through the whole wall thickness of the product, which was as above.

Example 3

20 g of epoxy resin-Araldite ("Araldite" is a Trade Mark) (10 g of component A and 10 g of component B) were dissolved in 100 cm$^3$ of methylene chloride to give a first solution. 600 g

of 3 mm long, chopped glass fibres were introduced into a low speed mixer (20 r.p.m.) and sprayed with said solution while mixed. The coated, still wet, fibres were mixed with 2400 g of cross-linkable PE powder in low speed mixer. The glass fibre—PE mixture was introduced into the cubic mold and the same procedure as in Example 2 was repeated. The product obtained had perfect straight surfaces and nearly a zero shrinkage. Its glass fibre distribution was excellent. There were no fibres on the inner surface of this product that were not completely incorporated in the resin. In other words, the fibres of the innermost layer were covered by a PE layer. ·

Example 4

Continuous glass fibres were transferred through a 5% solution of ethylene-vinyl acetate copolymer in chloroform (the EVA copolymer was a U.S.I. product tradename MU 760). The fibres after being dried were chopped to a length of about 6 mm and 600 g of them were mixed with 2400 g of 35 mesh PE powder (density=0.937 g/cm$^3$; mfi=5 g/10 min.). The coating of the cube followed exactly the procedure described in Example 1. A very good distribution of the glass fibres, through the whole wall thickness, was achieved.

Similar results were obtained when the continuous fibres were coated by a hot 5% PE solution in toluene.

Example 5

A 5% solution of EVA copolymer (MU 760, U.S.I.) in 50 cm$^3$ of chloroform was sprayed on 600 g chopped glass fibres while mixed in a low speed mixer. The coated fibres were then mixed with 2400 g of MDPE (medium density polyethylene, density=0.937, mfi=5). The mixture was introduced into the cubic mold and followed the procedure described in Example 1 with similar product results.

Example 6

A two layer cubic product was cast in which the external layer was a glass reinforced PE and the second layer was normal unreinforced polyethylene. The glass fibre treatment and the casting of the first layer followed the procedure described in Example 1.

The mold was charged with 3000 g of the mixture of glass fibres (20%)—PE and after rotating for 30 min. in the oven at 320°C, the mold was opened and 1000 g of PE powder (density 0.918 g/cm$^3$, mfi=5) were introduced. The mold was reclamped and introduced into the oven for another 15 min.

The product obtained had improved impact strength when impacted by a falling dart on the external surface.

Example 7

400 g of preheated chopped glass fibres were premixed with 1600 g of cross linkable polyethylene. The mixture was introduced into a spherical mold with a diameter of 25 cm. The mold, while biaxially rotating, was introduced into an oven at 280°C for 55 min. The product obtained had a wall thickness of 15 mm and the glass fibres were perfectly distributed through the whole wall thickness.

Example 8

Chopped glass fibres were treated as in Example 1. A mixture of 2 kg. treated glass fibres and 8 kg. of 35 mesh PE powder were introduced into an aluminum mold of an elongated ovoid shape. The mold was equipped with a device which enabled the introduction of gas into the mold while biaxially rotating. The mold was hermetically closed so that it could keep a pressure of at least 20 psi. The charged mold while rotating was introduced into an air convected oven at 360°C for 22 min. The mold was then removed from the oven into a cooling chamber and air cooled for 3 min., then gas was introduced into the mold to generate an internal pressure in the mold of about 1 bar (14 psi). This pressure was maintained through the whole cooling cycle. Due to that pressure, two things were achieved:

1. It caused the fibres of the inner layer to lie and be better incorporated in the molten resin.

2. The inner pressure reduced the shrinkage of the product during the cooling cycle, thus, reducing deformations formed in the product.

Table 1 indicates the difference in the percent of shrinkage between the reinforced product prepared as described and an unreinforced product molded under the exact same conditions.

TABLE 1

| $L_1$ mm | $L_2$ mm | $L_3$ mm | $\dfrac{L_2}{L_1}$% | $\dfrac{L_3}{L_1}$% | $\theta 1$ mm | $\theta 2$ mm | $\theta 3$ mm | $\dfrac{\theta 2}{\theta 1}$ | $\dfrac{\theta 3}{\theta 1}$ |
|---|---|---|---|---|---|---|---|---|---|
| 1820 | 1807 | 1775 | 0.71 | 2.47 | 276 | 274 | 270 | 0.72 | 2.17 |

$L_1$=Inner length of the mold
$L_2$=The length of the reinforced product
$L_3$=The length of the unreinforced product
$\theta_1$=The inner diameter of the mold at the mid cross-section thereof
$\theta_2$=The diameter of the reinforced product at the mid cross-section thereof
$\theta_3$=The diameter of the unreinforced product at the mid cross-section thereof.

As will be realised, the significant reduction in shrinkage achieved when using a method of the present invention constitutes a major advance in the art since it indicates that structures can be mass-reproduced with substantial uniform reproducability of dimensions of the produced structures.

Furthermore, as will be realized from the above examples and description, in accordance with the method of the present invention, it is possible in a single molding operation to produce a uniform layer of a fibre reinforced plastic material having a thickness of anywhere from 2 to 30 mm and a fibre content of as much as 30% which layer is still characterized by having a substantially uniform distribution of fibres throughout the whole thickness of said layer.

Of course, such a layer could be combined with one or more other layers of unreinforced plastic material for esthetic or other commercial reasons, however, such a combination does not detract from the fact that the present invention enables the production of a substantially uniform layer of fibre reinforced plastic material as described.

It will be evident to those skilled in the art that the invention is not limited to the details of the foregoing illustrative embodiments and examples and that the present invention may be embodied in other specific forms without departing from the essential attributes thereof, and it is, therefore, desired that the present examples be considered in all respects as illustrative and not restrictive, reference being made to the appended claims, rather than to the foregoing description, and all changes which come with the meaning and range of equivalency of the claims are, therefore, intended to be embraced therein.

**Claims**

1. A method for producing a substantially uniform layer of a fibre-reinforced thermoplastic resin comprising

a) pretreating said fibres by at least partially coating them with a thermoplastic resin compatible with, having a melting point substantially not higher than said layer-forming thermoplastic resin and sinterable therewith, to produce discrete reinforcing fibres having the required integrity, length and strength for rotational molding,

b) and then subjecting a substantially homogeneous blend of said pretreated fibres and said layer-forming thermoplastic resin to a rotational molding process whereby there is produced a layer of fibre reinforced thermoplastic resin having a substantially uniform distribution of fibres throughout the whole thickness of said layer.

2. A method according to claim 1 wherein said layer-forming thermoplastic resin is selected from the group consisting of polyolefins, ethylene vinyl acetate copolymers, thermoplastic polyesters, polycarbonates, polyamides, acetal copolymers and combinations thereof.

3. A method according to claim 2, wherein said fibres are glass fibres and said layer forming thermoplastic resin is polyethylene which is initially in powder form.

4. A method according to claim 1 wherein said pretreated fibres are subjected to said rotational molding process in lengths ranging from about 3 to about 12 mm.

5. A method according to claim 3 wherein said polyethylene powder and said pretreated glass fibres are combined in such proportions as to produce a glass-fibre reinforced polyethylene layer having a fibre content of about 5 to about 30%.

6. A method according to claim 3 comprising pre-treating said glass fibres to create adhesive sites thereon and then premixing said glass fibres with polyethylene powder to effect the adhesion of polyethylene particles thereto.

7. A method according to claim 6 wherein said fibres are preheated to a temperature in the range of about 160° to about 320°C and then premixed with polyethylene powder to effect the sintering and adhesion of said polyethylene powder on and to said hot fibres.

8. A method according to claim 6 wherein said fibres are sprayed with a volatile solution of a thermosetting adhesive and then premixed with polyethylene powder whereby upon the hardening of said adhesive said polyethylene adheres thereto and forms at least a partial coating thereon.

9. A method according to claim 3 wherein continuous fibres are pretreated with a solution of ethylene vinyl acetate copolymer, chopped to lengths of 3 to 12 mm and homogeneously blended with polyethylene powder.

10. A method according to claim 3 wherein continuous fibres are pretreated with a hot solution containing dissolved polyethylene, chopped to lengths of 3 to 12 mm and homogeneously blended with polyethylene powder.

11. A method according to claim 6 comprising temporarily wetting said glass fibres and then premixing said glass fibres with polyethylene powder to effect a temporary partial coating of polyethylene particles on said fibres.

12. A method according to claim 11 wherein said temporary wetting is effected with a non-volatile liquid peroxide.

13. Discrete reinforcing fibres for use in rotational molding to produce a substantially uniform layer of a fibre reinforced thermoplastic resin having a substantially uniform distribution of fibres throughout the whole thickness of said layer, wherein said fibres are pretreated with at least a partial coating of a thermoplastic resin compatible with, having a melting point substantially not higher than that of said layer-forming thermoplastic resin and sinterable therewith, to produce discrete reinforcing fibres having the required integrity, length and strength for rotational molding.

14. Reinforcing fibres according to claim 13 wherein said fibres are in lengths of about 3 to about 12 mm.

15. Reinforcing glass fibres according to claim 13.

16. Pretreated reinforcing fibres according to claim 13 in combination with a compatible rotationally moldable thermoplastic resin wherein the fibre content of said rotationably moldable composition is about 10 to about 30%.

17. Reinforcing fibres according to claim 13 whenever pretreated with at least a partial coating of a resin selected from the group consisting of polyethylene and ethylene vinyl acetate copolymer.

18. Glass fibres according to claim 13 or 17, for use in rotational molding to produce a substantially uniform glass fibre reinforced polyethylene layer, wherein said glass fibres are pretreated with at least a partial coating of a resin compatible and sinterable with polyethylene.

19. A rotationally molded layer of fibre reinforced thermoplastic resin having a substantially uniform distribution of fibres throughout the whole thickness of said layer produced according to the method of claim 1 and having a fibre content of about 10 to about 30%.

**Patentansprüche**

1. Verfahren zum Herstellen einer im wesentlichen gleichförmigen Schicht faserverstärken thermoplastischen Harzes, welches aufweist:

(a) Vorbehandeln der Fasern durch mindestens teilweises Überziehen mit einem mit diesen kompatiblen thermoplastischen Harz, mit einem Schmelzpunkt, der im wesentlichen nicht höher als der des schichtbildenden thermoplastischen Harzes ist und das mit diesem sinterbar ist, um einzelne Verstärkungsfasern mit der notwendigen Unsehrtheit, Länge und Stärke für das Rotationsformen herzustellen,

(b) und sodann Unterwerfen einer im wesentlichen homogenen Mischung der vorbehandelten Fasern und des schichtbildenen thermoplastischen Harzes einem Rotationsformverfahren, wodurch eine Schicht faserverstärkten thermoplastischen Harzes hergestellt wird, welche im wesentlichen gleichmäßge Faserverteilung über die gesamte Dicke der Schicht besitzt.

2. Verfahren nach Anspruch 1, wobei das schichtbildene thermoplastische Harz ausgewählt ist aus der Gruppe bestehend aus Polyolefinen, Ethylenvinylacetat—Copolymeren, thermoplastischen Polyestern, Polycarbonaten, Polyamiden, Acetal Copolymeren und Kombinationen derselben.

3. Verfahren nach Anspruch 2, wobei die Fasern Glasfasern sind und das schichtbildende thermoplastische Harz Polyethylen ist, welches anfänglich in Pulverform vorliegt.

4. Verfahren nach Anspruch 1, wobei die vorbehandelten Fasern dem Roationsformverfahren in Längen zwischen etwa 3 bis 12 mm unterworfen werden.

5. Verfahren nach Anspruch 3, wobei das Polyethylenpulver und die vorbehandelten Glasfasern in einem Verhältnis kombiniert werden, um eine glasfaserverstärkte Polyethylenschicht mit einem Fasergehalt von etwa 5 bis etwa 30% herzustellen.

6. Verfahren nach Anspruch 3, welches das Vorbehandeln der Glasfasern zum Herstellen von Haftstellen auf derselben und anschließendes Vormischen der Glasfaser mit Polyethylenpulver, um Anhaften der Polyethylenpartikel an denselben, zu bewirken, aufweist.

7. Verfahren nach Anspruch 6, wobei die Fasern auf eine Temperatur im Bereich von etwa 160° bis etwa 320°C vorgeheizt werden und anschließend mit Polyethylenpulver vorgemischt werden, um das Sintern und Anhaften des Polyethylenpulvers auf und an den heißen Fasern zu bewirken.

8. Verfahren nach Anspruch 6, wobei die Fasern mit einer flüchtigen Lösung eines thermisch abbindenden Harzes besprüht werden und anschließend mit einem Polyethylenpulver vorgemischt werden, wodurch bei Aushärten des Klebstoffes das Polyethylen an diesen haftet und mindestens einen teilweisen Überzug auf denselben bildet.

9. Verfahren nach Anspruch 3, wobei endlose Fasern mit einer Lösung von Ethylenvinylacetat-Copolymeren vorbehandelt werden, auf Längen von 3 bis 12 mm geschnitten und homogen mit Polyethylenpulver vermischt werden.

10. Verfahren nach Anspruch 3, wobei endlose Fasern mit einer heißen Lösung mit einem Gehalt an gelöstem Polyethylen vorbehandelt werden, auf Längen von 3 bis 12 mm geschnitten und homogen mit Polyethylenpulver vermischt werden.

11. Verfahren nach Anspruch 6, welches das zeitweilige Benetzen der Glasfasern und dann Vormischen der Glasfasern mit Polyethylenpulver aufweist, um einen temporären partiellen Überzug mit Polyethylenpartikeln auf den Fasern zu bewirken.

12. Verfahren nach Anspruch 11, wobei das vorübergehende Benetzen mit einem nichtflüchtigen flüssigen Peroxid bewirkt wird.

13. Diskrete Verstärkungsfasern zum Einsatz beim Roationsformen um eine im wesentlichen gleichförmige Schicht eines faserverstärkten thermoplastischen Harzes mit im wesentlichen gleichmäßiger Faserverteilung über die gesamte Dicke der Schicht herzustellen, wobei die Fasern mit mindestens einem partiellen Überzug eines mit diesem kompatiblen thermoplastischen Harzes vorbehandelt werden, welches einen Schmelzpunkt im wesentlichen nicht höher als demjenigen des schichtbildenden thermoplastischen Harzes, das mit demselben sinterbar ist, aufweist, um diskrete Verstärkungsfasern mit der notwendigen Unversehrtheit, Länge und Stärke zum Rotationsformen herzustellen.

14. Verstärkungsfasern gemäß Anspruch 13, wobei die Fasern in Längen von etwa 3 bis etwa 12 mm vorliegen.

15. Verstärkungsglasfasern nach Anspruch 13.

16. Vorbehandelte Verstärkungsfasern gemäß Anspruch 13 in Kombination mit einem kompatiblen rotationsformbaren thermoplastischen Harz, wobei der Fasergehalt der rotationsformbaren Zusammensetzung etwa 10 bis etwa 30% beträgt.

17. Verstärkungsfasern nach Anspruch 13, vorbehandelt mit mindestens einem partiellen Überzug eines Harzes ausgewählt aus der Gruppe bestehend aus Polyethylen und Ethylenvinylacetat-Copolymer.

18. Glasfasern gemäß Anspruch 13 oder 17, zum Einsatz beim Rotationsformen, um eine im. wesentlichen gleichförmige, glasfaserverstärkte Polyethylenschicht herzustellen, wobei die Glasfaser mit mindestens einem partiellen Überzug eines mit Polyethylen kompatiblen und sinterbaren Harzes vorbehandelt worden sind.

19. Rotationsgeformte Schicht faserverstärkten thermoplastischen Harzes mit im wesentliche gleichförmiger Faserverteilung über die gesamte Dicke der Schicht, hergestellt gemäß dem Verfahren nach Anspruch 1 mit einem Fasergehalt von etwa 10 bis etwa 30%.

**Revendications**

1. Procédé pour produire une couche sensiblement uniforme d'une résine thermoplastique renforcée de fibres, dans lequel

a) on pré-traite lesdites fibres en les revêtant au moins partiellement d'une résine thermoplastique compatible avec elles, ayant un point de fusion ne dépassant pas sensiblement celui de ladite résine thermoplastique formant la couche pouvant être frittée avec elle, pour produire des fibres de renforcement discrètes ayant l'intégrité, la longueur et la résistance requises pour le moulage par rotation, puis

b) on soumet un mélange sensiblement homogène desdites fibres pré-traitées et de ladite résine thermoplastique formant la couche à un procédé de moulage par rotation où l'on produit une couche de résine thermoplastique renforcée par des fibres ayant une distribution sensiblement uniforme de fibres dans toute l'épaisseur de ladite couche.

2. Procédé selon la revendication 1 dans lequel ladite résine thermoplastique formant la couche est choisie dans le groupe constitué par les polyoléfines, les copolymères éthylène-acétate de vinyle, les polyesters thermoplastiques, les polycarbonates, les polyamides, les copolymères d'acétal et leurs combinaisons.

3. Procédé selon la revendication 2, dans lequel lesdites fibres sont des fibres de verre et ladite résine thermoplastique formant la couche est du polyéthylène qui est initialement sous forme de poudre.

4. Procédé selon la revendication 1 dans lequel lesdites fibres prétraitées sont soumises audit procédé de moulage par rotation à des longueurs allant d'environ 3 à environ 12 mm.

5. Procédé selon la revendication 3 dans lequel on combine ladite poudre de polyéthylène et lesdites fibres de verre prétraitées dans des proportions permettant de produire une couche de polyéthylène renforcée de fibres de verre ayant une teneur en fibres d'environ 5 à environ 30%.

6. Procédé selon la revendication 3 dans lequel on prétraite lesdites fibres de verre pour créer dessus des sites adhésifs puis on mélange préalablement lesdites fibres de verre avec de la poudre de polyéthylène pour y réaliser l'adhésion de particules de polyéthylène.

7. Procédé selon la revendication 6 dans lequel on pré-chauffe lesdites fibres à une température située dans un intervalle allant d'environ 160° à environ 320°C puis on mélange préalablement avec de la poudre de polyéthylène pour effectuer le frittage et l'adhésion de ladite poudre de polyéthylène sur et auxdites fibres chaudes.

8. Procédé selon la revendication 6 dans lequel on pulvérise sur lesdites fibres une solution volatile d'un adhésif thermodurcissable puis on mélange préalablement avec de la poudre de polyéthylène, ce qui fait que lors du durcissement dudit adhésif ledit polyéthylène y adhère et forme dessus un revêtement au moins partiel.

9. Procédé selon la revendication 3 dans lequel on pré-traite des fibres continues avec une solution de copolymère éthylèneacétate de vinyle, broyé à des longueurs de 3 à 12 mm et mélangé de manière homogène à une poudre de polyéthylène.

10. Procédé selon la revendication 3 dans lequel on pré-traite des fibres continues avec une solution chaude contenant du polyéthylène dissous, broyé à des longueurs de 3 à 12 mm et mélangé de manière homogène à une poudre de polyéthylène.

11. Procédé selon la revendication 6 dans lequel on humidifie temporairement lesdites fibres puis on mélange préalablement lesdites fibres de verre avec une poudre de polyéthylène pour effectuer un revêtement partiel temporaire de particules de polyéthylène sur lesdites fibres.

12. Procédé selon la revendication 11 dans lequel ladite humidification temporaire est effectuée avec un peroxyde liquide non volatil.

13. Fibres de renforcement discrètes pour l'application dans le moulage par rotation pour produire une couche sensiblement uniforme d'une résine thermoplastique renforcée de fibres ayant une répartition sensiblement uniforme de fibres dans toute l'épaisseur de ladite couche, dans laquelle on pré-traite lesdites fibres avec au moins un revêtement partiel d'une résine thermoplastique compatible avec elles, ayant un point de fusion qui n'est pas sensiblement supérieur à celui de ladite résine thermoplastique formant couche et pouvant être frittée avec elle, pour produire des fibres de renforcement discrètes ayant l'intégrité, la longueur et la résistance requises pour un moulage par rotation.

14. Fibres de renforcement selon la revendication 13, lesdites fibres présentant des longueurs d'environ 3 à environ 12 mm.

15. Fibres de verre de renforcement selon la revendication 13.

16. Fibres de renforcement pré-traitées selon la revendication 13 en combinaison avec une résine thermoplastique compatible moulable par rotation où la teneur en fibres de ladite composition moulable par rotation est d'environ 10 à environ 30%.

17. Fibres de renforcement selon la revendication 13 lorsqu'elles sont pré-traitées avec au moins un revêtement partiel d'une résine choisie dans le groupe constitué par le polyéthylène et le copolymère éthylène-acétate de vinyle.

18. Fibres de verre selon les revendications 13 ou 17 pour l'application dans le moulage par rotation pour produire une couche de polyéthylène renforcée de fibres de verre substantiellement uniforme, où l'on pré-traite lesdites fibres de verre avec au moins un revêtement partiel d'une résine compatible et frittable avec le polyéthylene.

19. Couche moulée par rotation de résine thermoplastique renforcée de fibres ayant une répartition sensiblement uniforme de fibres dans toute l'épaisseur de ladite couche produite selon le procédé de la revendication 1 et ayant une teneur en fibres d'environ 10 à environ 30%.